# EUROPÄISCHE PATENTSCHRIFT

(11) **EP 3 228 679 B1**
(45) Veröffentlichungstag und Bekanntmachung des Hinweises auf die Patenterteilung: **17.06.2020**
(21) Anmeldenummer: 17000448.5
(22) Anmeldetag: 20.03.2017
(51) Int. Cl.: C09K 5/14, C08F 20/06, C08F 2/44, C08K 3/34, B01J 20/12, B01J 20/26

(54) **HYBRIDMATERIAL**
HYBRID MATERIAL
MATÉRIAU HYBRIDE

(30) Priorität: 04.04.2016 DE 102016003834
(43) Veröffentlichungstag der Anmeldung: 11.10.2017
(73) Patentinhaber: Geohumus GmbH, 60386 Frankfurt am Main (DE)
(72) Erfinder: Volk, Heinrich, 61118 Bad Vilbel (DE); Volk, Thomas, 63128 Dietzenbach (DE)
(74) Vertreter: Schneiders & Behrendt PartmbB Rechtsanwälte - Patentanwälte

(56) Entgegenhaltungen:
- WO-A1-2006/119828
- WO-A1-2011/141526
- DE-A1-102009 033 413

## Beschreibung

Die Erfindung betrifft ein Hybridmaterial, das ein superabsorbierendes organisches Polymermaterial und einen darin einpolymerisierten anorganischen Feststoff aufweist.

Aus der DE 10 2009 033 413 A1 ist die Verwendung eines superabsorbierenden Materials zur Erhöhung der Wärmekapazität und/oder Verbesserung des Wärmeübergangs in Wärmespeichern bekannt. Das superabsorbierende Material umfasst mindestens ein superabsorbierendes organisches Polymer, wobei das superabsorbierende Material eine Mischung aus mindestens einem superabsorbierenden organischen Polymer und mindestens einem Schüttgut ist. Das Schüttgut ist aus Erdboden, Sand, Kies, Ton, Abraum, Schlacke, Bauschutt, Aushub und dergleichen ausgewählt. Die Erhöhung der Wärmekapazität ist hierbei jedoch nur im gequollenen Zustand des superabsorbierenden organischen Polymers realisierbar, d.h. es muss nach der Mischung des Polymers mit dem Schüttgut noch Wasser zugegeben werden. In den bereits gequollenen Superabsorber lässt sich das Schüttgut jedoch nicht einarbeiten.

Aus der EP 2 168 990 A2 ist ein wasserquellbares Hybridmaterial bekannt ist, das ein zeitabhängiges Quellverhalten aufweist, um das für Pflanzen notwendige Mineral- und Nährstoffangebot in einer ballaststoffhaltigen vernetzten Polymermatrix so bereit zu stellen, dass die Wasserspeicherfähigkeit bzw. Quellfähigkeit des Hybridmaterials nicht beeinträchtigt wird. Verwendung findet dieses Hybridmaterial in der Landwirtschaft, im Wein-, Garten- und Landschaftsbau, für Sport-, Golf- und Gartenplätze, zur Dachbegrünung oder Grabbegrünung, zur Stabilisierung von Solitärpflanzen, Hang- oder Dünenbefestigung, zur Bodenverbesserung, als Wasser- und Wirkstoffspeicher, als Tierstreu, zur Absorption von Gerüchen, zur Absorption und Desorption von Düngemitteln, Pestiziden, Fungiziden, Mikroorganismen und/oder in Kombination mit Saatgut als Keimungsbeschleuniger.

Die DE 101 30 427 A1 offenbart Wasser absorbierende Polymere auf Basis von vernetzten Homo- und Copolymerisaten monoethylenisch ungesättigter Carbonsäuren mit einer verbesserten Wasseraufnahmefähigkeit, einer guten Druckstabilität und UV-Stabilität. Diese Polymere besitzen äußerlich eine Schwammstruktur, so dass beim Quellungsprozess in wässrigen Flüssigkeiten aufgrund der Volumenvergrößerung der Poren ein Saugeffekt eintritt, der eine über die Quellfähigkeit des Gels gehende Flüssigkeitsaufnahme bewirkt.

Aus der DE 10 2005 021 221 A1 ist ein Superabsorber aus homopolymeren oder copolymeren vernetzten Polyacrylaten bekannt, die polymergebundene gemahlene Mineralstoffe als Ballaststoffe enthalten, bei welchen es sich vorzugsweise oder überwiegend um fein gemahlenen Quarzsand, Ton und/oder Schiefer handelt, wobei gegebenenfalls weitere anorganische und organische Zusatzstoffe enthalten sind. Die Gewichtsverhältnisse der Polyacrylate zu den gemahlenen Zusatzstoffen liegen zwischen 99:1 und 1:99, vorzugsweise zwischen 90:10 und 10:90, wobei der Superabsorber vorzugsweise in Granulatform vorliegt. Mit diesem bekannten Superabsorber wird ein für Pflanzen notwenige Mineral- und Nährstoffangebot in einem ballasthaltigen vernetzten Acrylathomo- oder -copolymerisat so zur Verfügung gestellt, dass die Wasserspeicherfähigkeit des Superabsorbers nicht beeinträchtigt wird.

Bei diesen bekannten Materialien besteht das Problem, dass sie im gequollenen Zustand im Temperaturbereich von 60 °C bis 90°C über keine ausreichende thermische Stabilität verfügen. Diese bekannten HybridMaterialien weisen mit zunehmendem Feststoffgehalt zwar eine zunehmende thermische Stabilität auf, ihre spezifische Wärmekapazität nimmt jedoch gleichzeitig ab.

Die DE 10 2005 001 056 A1 offenbart ein Verfahren zur Herstellung eines Sorptions-Speicherelements mit den Verfahrensschritten: Eine Form zur Festlegung der äußeren Konturen des Speicherelementes wird wenigstens teilweise mit einer Schüttung aus Sorptionsmaterial in granularer Form gefüllt, und in die Zwischenräume der Schüttung aus dem Sorptionsmaterial wird ein Material mit einer Wärmeleitfähigkeit von mehr als 10 W/mK infiltriert, das einen offenporigen Festkörper ausbildet. Verwendung kann dieses bekannte Sorptions-Speicherelement in einer Adsorber/Desorber-Einheit und/oder einer Kondensator-Verdampfer-Einheit einer Feststoff-Sorptionswärmepumpe finden.

Die DE 43 00 141 A1 beschreibt ein Verfahren zur Herstellung und/oder Verwendung von Kälte- und/oder Wärmespeichern aus aufquellbaren, flexiblen, sterilen, biologisch abbaubaren oder kompostierbaren CO₂ neutral verbrennbaren, für die Umwelt unschädlichen organischen und anorganischen Materialien. Darüber hinaus offenbart die WO 2011/141526 Hybridmaterialien.

Der Erfindung liegt die Aufgabe zugrunde, ein Hybridmaterial der eingangs genannten Art zu schaffen, das im gequollenen Zustand bei Temperaturen ≥ 60°C über eine gute thermische Stabilität verfügt und das gleichzeitig eine hohe spezifische Wärmekapazität aufweist, die mindestens um 50% größer ist als die von Wasser.

Diese Aufgabe wird erfindungsgemäß durch die Merkmale des Anspruchs 1, d.h. dadurch gelöst, dass der Feststoff des Hybridmaterials von Bentonit gebildet ist, und das Polymermaterial eine Mischung aus mindestens zwei Vernetzern aufweist, von welchen der eine Vernetzer ein kurzkettiger Vernetzer und der andere Vernetzer ein langkettiger Vernetzer ist und der kurzkettige Vernetzer von wenigstens zwei aus Vinylestern, Acrylsäureestern, Methacrylsäureestern und Allylethern gebildet ist und der langkettige Vernetzer ein Oligomer oder ein Polymer mit mindestens zwei durch freie radikalische Polymerisation polymerisierbare Gruppen ist, wobei die mindestens zwei Vernetzer unterschiedliche Funktionalitäten aufweisen und das Hybridmaterial außerdem funktionelle Monomere aufweist, die von Acrylaten und/oder Methacrylaten gebildet sind, die funktionelle polare Gruppen aufweisen, und dass das Verhältnis von Bentonit zu Polymermaterial 1:3 bis 3:1 beträgt.

Erfindungsgemäß wird Bentonit als alleiniger Feststoff verwendet. Zur Erhöhung der Wärmekapazität werden die funktionellen Monomere verwendet, wobei das Verhältnis der Monomere zum Polymermaterial genau definiert ist. Es beträgt 1:3 bis 3:1, vorzugsweise 1:1 bis 1:2.

Das erfindungsgemäße Hybridmaterial besteht aus einem Netzwerk kovalent vernetzter teilneutralisierter Polyacrylsäure oder aus kovalent teilneutralisierten Copolymeren aus Polyacrylsäure und funktionellen Monomeren, wobei ein Anteil von 1 bis 30 Mol-% Acrylsäure Monomere durch funktionelle Monomere ersetzt sein kann. In das Netzwerk ist der anorganische Feststoff einpolymerisiert, d.h. der Feststoff wird vor der Synthese in die Syntheselösung eingegeben. Daher handelt es sich erfindungsgemäß nicht um eine Mischung aus Superabsorber und anorganischem Feststoff, sondern um einen Superabsorber, in dem der anorganische Feststoff, d.h. das Bentonit, einpolymerisiert wurde. Die vorteilhaften Eigenschaften des erfindungsgemäßen Hybridmaterials ergeben sich also nicht rein additiv aus den Eigenschaften des Superabsorbers und des Feststoffs sondern sind weiter verbessert.

Im Vergleich hierzu sind Mischungen aus Superabsorber und Feststoff, wie sie in der eingangs zitierten DE10 2009 033 413 A1 offenbart sind, immer inhomogen und werden beim Handling noch inhomogener. D.h. bei der Zugabe von Wasser zu einer Mischung aus Superabsorber und Feststoff ergeben sich im gequollenen Gemisch große Inhomogenitäten, wodurch die Wärmespeicher-Eigenschaften verschlechtert werden.

Durch die Verwendung von Bentonit als alleinigen Festsoff wurde die thermische Stabilität des Hybridmaterials überraschenderweise signifikant erhöht, ohne den beim Stand der Technik gegebenen negativen Einfluss der Feststoffe auf die spezifische Wärmekapazität zu bewirken. Es wurde gefunden, dass die definierten Verhältnisse von Bentonit zu Acrylsäure im Bereich 1:1 bis 1:2, vorzugsweise 1:1, in überraschender Weise eine deutliche Erhöhung der thermischen Stabilität und gleichzeitig der spezifischen Wärmekapazität ergeben.

Durch eine reine Kombination des Standes der Technik, wie er oben beschrieben worden ist, war es nicht möglich, eine Erhöhung der thermischen Stabilität durch die Verwendung von reinem Bentonit und insbesondere auch in den zuletzt angegebenen Mischungsverhältnissen vorherzusehen. Die Erhöhung der spezifischen Wärmekapazität bei der Verwendung von Bentonit als alleinigem Feststoff und insbesondere auch der oben angegebenen definierten Verhältnisse von Bentonit zu Acrylsäure sind auch nicht aus dem Sachverhalt schließbar, dass Bentonit ein hohes Wärmespeichervermögen besitzt, da experimentell kein direkter Zusammenhang zwischen der Wärmekapazität von Feststoff und der Wärmekapazität des den Feststoff enthaltenden Hybridmaterials gefunden wurde. Die Wärmekapazität setzt sich nicht additiv aus den Wärmekapazitäten der Bestandteile des Hybridmaterials zusammen, wie bereits weiter oben allgemeiner ausgeführt worden ist.

Erfindungsgemäß beschränken sich die Vernetzer definitiv auf Vinylester, Acrylsäure-Ester, Methacrylsäure-Ester Allylether, die miteinander vermischt sind. D.h. die definitiven Vernetzer werden nicht einzeln sondern als Mischungen angewandt, wobei erfindungsgemäß zwingend mindestens zwei der genannten Vernetzer angewandt werden, deren Kombinationsmöglichkeiten definitiv eingeschränkt sind. Die erfindungsgemäßen Vernetzer-Kombinationen - und nur diese - führen in vorteilhafter Weise zu einer Erhöhung der thermischen Stabilität und der spezifischen Wärmekapazität, und müssen die folgenden Kriterien erfüllen: Es muss ein kurzkettiger Vernetzer und ein langkettiger Vernetzer angewandt werden, wobei der langkettige Vernetzer selbst ein Oligomer oder ein Polymer mit mindestens zwei durch freie radikalische Polymerisation polymerisierbare Gruppen enthält. Beide Vernetzer müssen voneinander verschiedene Funktionalitäten aufweisen, die bspw. durch Allyl und Methacryl gegeben sind.

Für mehr als zwei Vernetzer enthaltende Vernetzer-Kombinationen gilt entsprechendes.

Bei dem erfindungsgemäßen Hybridmaterial sind die funktionellen Monomere von Monomeren - ausgenommen Acrylsäure, Acrylsäuresalze, und den definierten Vernetzern - gebildet. Durch diese erfindungsgemäßen funktionellen Monomere wird die thermische Stabilität in vorteilhafter Weise erhöht, gleichzeitig tragen sie in vorteilhafter Weise zu einer erhöhten spezifischen Wärmekapazität des erfindungsgemäßen Hybridmaterials bei. Die funktionellen Monomere sind von Acrylaten und Methacrylaten mit polaren Gruppen wie Sulfonsäure und/oder Amide mit basischen Gruppen gebildet.

## Patentansprüche

1. Hybridmaterial, das ein superabsorbierendes organisches Polymermaterial und einen darin einpolymerisierten anorganischen Feststoff aufweist, **dadurch gekennzeichnet, dass** der Feststoff von Bentonit gebildet ist und das Polymermaterial eine Mischung aus mindestens zwei Vernetzern aufweist, von welchen ein Vernetzer ein kurzkettiger Vernetzer und ein anderer Vernetzer ein langkettiger Vernetzer ist und der kurzkettige Vernetzer von wenigstens zwei aus Vinylestern, Acrylsäureestern, Methacrylsäureestern und Allylethern gebildet ist und der langkettige Vernetzer ein Oligomer oder ein Polymer mit mindestens zwei durch freie radikalische Polymerisation polymerisierbare Gruppen ist, wobei die mindestens zwei Vernetzer unterschiedliche Funktionalitäten aufweisen und das Hybridmaterial außerdem funktionelle Monomere aufweist, die von Acrylaten und/oder Methacrylaten gebildet sind, die funktionelle polare Gruppen aufweisen, und dass das Verhältnis von Bentonit zu Polymermaterial 1:3 bis 3:1 beträgt.

2. Hybridmaterial nach Anspruch 1, **dadurch gekennzeichnet, dass** das Verhältnis von Bentonit zu Polymermaterial 1:1 bis 1:2, beträgt.

3. Hybridmaterial nach Anspruch 1, **dadurch gekennzeichnet, dass** das Polymermaterial von vernetzter teilneutralisierter Polyacrylsäure oder kovalent teilneutralisierten Copolymeren aus Acrylsäure und funktionellen Monomeren gebildet ist.

4. Hybridmaterial nach Anspruch 1, **dadurch gekennzeichnet, dass** die unterschiedlichen Funktionalitäten der mindestens zwei Vernetzer durch Allyl- und Methacrylgruppen gegeben sind.

5. Hybridmaterial nach Anspruch 1, **dadurch gekennzeichnet, dass** die funktionellen Monomere verschieden sind von Acrylsäure, Acrylsäuresalze, und den definierten kurzkettigen Vernetzern.

6. Verwendung des geqoullenen Hybridmaterials nach einem der vorhergehenden Ansprüche als Wärmespeicher-Material.

## Claims

1. Hybrid material, comprising a superabsorbent organic polymer material and an inorganic solid polymerised therein, **characterised in that** the solid is formed by bentonite and the polymer material comprises a mixture of at least two crosslinking agents, of which one crosslinking agent is a short-chain crosslinking agent and another crosslinking agent is a long-chain crosslinking agent and the short-chain crosslinking agent is formed by at least two of vinyl esters, acrylic acid esters, methacrylic acid esters and allyl ethers and the long-chain crosslinking agent is an oligomer or a polymer with at least two groups that can be polymerised by free-radical polymerisation, wherein the at least two crosslinking agents have different functionalities and the hybrid material additionally comprises functional monomers, which are formed by acrylates and/or methacrylates having functional polar groups, and **in that** the ratio of bentonite to polymer material is 1:3 to 3:1.

2. Hybrid material according to claim 1, **characterised in that** the ratio of bentonite to polymer material is 1:1 to 1:2.

3. Hybrid material according to claim 1, **characterised in that** the polymer material is formed by crosslinked partially neutralised polyacrylic acid or covalently partially neutralised copolymers of acrylic acid and functional monomers.

4. Hybrid material according to claim 1, **characterised in that** the different functionalities of the at least two crosslinking agent are provided by allyl and methacryloyl groups.

5. Hybrid material according to claim 1, **characterised in that** the functional monomers are different from acrylic acid, acrylic acid salts and the defined short-chain crosslinking agents.

6. Use of the swollen hybrid material according to one of the preceding claims as a heat storage material.

## Revendications

1. Matériau hybride, qui présente un matériau polymère organique super absorbant et une matière solide inorganique polymérisée dans celui-ci, **caractérisé en ce que** la matière solide est formée par de la bentonite et le matériau polymère présente un mélange d'au moins deux agents réticulants, dont un agent réticulant est un agent réticulant à chaîne courte et un autre réticulant est un agent réticulant à chaîne longue et l'agent réticulant à chaîne courte est formé par au moins deux parmi les vinylesters, les esters d'acide acrylique, les esters d'acide méthacrylique et les éthers allyliques et l'agent réticulant à chaîne longue est un oligomère ou un polymère avec au moins deux groupes polymérisables par une polymérisation radicalaire libre, dans lequel les au moins deux agents réticulants présentent des fonctionnalités différentes et le matériau hybride présente par ailleurs des monomères fonctionnels, qui sont formés par des acrylates et/ou des méthacrylates, qui présentent des groupes polaires fonctionnels, et que le rapport entre la bentonite et le matériau polymère est de 1:3 à 3:1.

2. Matériau hybride selon la revendication 1, **caractérisé en ce que** le rapport entre la bentonite et le matériau polymère est de 1:1 à 1:2.

3. Matériau hybride selon la revendication 1, **caractérisé en ce que** le matériau polymère est formé par de l'acide polyacrylique réticulé partiellement neutralisé ou des copolymères partiellement neutralisés de manière covalente composés d'acide acrylique et de monomères fonctionnels.

4. Matériau hybride selon la revendication 1, **caractérisé en ce que** les différentes fonctionnalités des aux moins deux agents réticulants sont données par des groupes allyliques ou méthacryliques.

5. Matériau hybride selon la revendication 1, **caractérisé en ce que** les monomères fonctionnels sont différents de l'acide acrylique, des sels d'acide acrylique et des agents réticulants à chaîne courte définis.

6. Utilisation du matériau hybride gonflé selon l'une quelconque des revendications précédentes en tant que matériau d'accumulateur de chaleur.
